# EUROPÄISCHE PATENTANMELDUNG

(11) **EP 2 200 155 A2**
(43) Veröffentlichungstag der Anmeldung: **23.06.2010**
(21) Anmeldenummer: 09012952.9
(22) Anmeldetag: 14.10.2009
(51) Int. Cl.: H02K 3/52, H02K 7/14, H02K 21/24, H02K 11/04

(54) **Elektronsich kommutierter Gleichstrommmotor für eine Flüssigkeitspumpe**

(30) Priorität: 19.12.2008 DE 102008064161
(71) Anmelder: Bühler Motor GmbH, 90459 Nürnberg (DE)
(72) Erfinder: Ihle, Olai, 90542 Eckenthal (DE); Bernreuther, Georg, 90449 Nürnberg (DE); Weiske, Klaus, 90459 Nürnberg (DE)

(57) **Zusammenfassung**

Die Erfindung betrifft einen elektronisch kommutierter Gleichstrommotor (1) für eine Flüssigkeitspumpe (2), mit einem Pumpengehäuse (3) mit einem Saugstutzen (4) und einem Druckstutzen (5) zum Anschluss an einen Flüssigkeitskreislauf, einem im Wesentlichen scheibenförmigen, im Pumpengehäuse drehbar gelagerten Pumpenrotor (6), bestehend aus einem Pumpenrad (7) mit mehreren Pumpenflügeln und einem Permanentmagneten (8), einer einen Pumpenraum (9) von einem Trockenraum (10) abtrennende Trennwand (11), wobei die Trennwand in einem Axialspalt (12) zwischen dem Pumpenrotor (6) und mehreren axial ausgerichteten bewickelten Statorpolen (14) des Gleichstrommotors angeordnet ist. Aufgabe der vorliegenden Erfindung ist es einen Gleichstrommotor so zu gestalten, dass er einfach und zuverlässig zu montieren ist, der besonders robust aufgebaut ist und damit eine sehr hohe Lebensdauer aufweist. Diese Aufgabe wird erfindungsgemäß durch die kennzeichnenden Merkmale des Anspruchs 1 gelöst.

## Beschreibung

Die Erfindung betrifft einen elektronisch kommutierter Gleichstrommotor (1) für eine Flüssigkeitspumpe (2), mit einem Pumpengehäuse (3) mit einem Saugstutzen (4) und einem Druckstutzen (5) zum Anschluss an einen Flüssigkeitskreislauf, einem im Wesentlichen scheibenförmigen, im Pumpengehäuse drehbar gelagerten Pumpenrotor (6), bestehend aus einem Pumpenrad (7) mit mehreren Pumpenflügeln und einem Permanentmagneten (8), einer einen Pumpenraum (9) von einem Trockenraum (10) abtrennende Trennwand (11), wobei die Trennwand in einem Axialspalt (12) zwischen dem Pumpenrotor (6) und mehreren axial ausgerichteten bewickelten Statorpolen (14) des Gleichstrommotors angeordnet ist.

Ein gattungsgemäßer elektronisch kommutierter Gleichstrommotor für eine Flüssigkeitspumpe ist aus der DE 196 46 617 A1 bekannt. Bei dem bekannten Gleichstrommotor sind die Anschlüsse lediglich in einem Steckerdeckel ohne besondere Sicherungsmaßnahmen gehalten und direkt mit einer Leiterplatte Kontaktiert. Die gleiche Leiterplatte ist unmittelbar mit den Wicklungsanschlüssen verbunden. Dieser Aufbau ist nicht stabil und führt unter Extrembelastungen und nach längerer Laufzeit zu Beschädigungen und Ausfällen.

Aufgabe der vorliegenden Erfindung ist es einen Gleichstrommotor so zu gestalten, dass er einfach und zuverlässig zu montieren ist, der besonders robust aufgebaut ist und damit eine sehr hohe Lebensdauer aufweist

Diese Aufgabe wird erfindungsgemäß durch die kennzeichnenden Merkmale des Anspruchs 1 gelöst. Durch die Trennung der einzelnen Funktionsebenen wird erreicht, dass mechanische Belastungen und elektronische Störeinflüsse von empfindlichen Bauteilen und Kontakten auf der bestückten Leiterplatte ferngehalten werden. Die Steckeranschlüsse sind auf einer eigenen Trägerplatte sicher gehalten und im Stator fixiert, dadurch können mechanische Belastungen hervorragend abgeleitet werden. Die erste Leiterplatte ist sehr einfach aufgebaut und wird mit bekannten Prozessen hergestellt, montiert und kontaktiert. Daher ist eine hohe Zuverlässigkeit im Montageprozess gewährleistet.

Weiterbildungen der Erfindung werden in den Unteransprüchen dargestellt.

Ein Ausführungsbeispiel der Erfindung wird nachfolgend anhand der Zeichnung näher erläutert. Es zeigen:
Fig. 1 eine räumliche Darstellung eines Pumpengehäuses,
Fig. 2 das Pumpengehäuse aus Fig.1 mit einem montierten Pumpenrotor,
Fig. 3 die Anordnung aus Fig. 2 mit einer montierten Trennwand,
Fig. 4 die Anordnung aus Fig. 3 mit montierten bewickelten Statorpolen,
Fig. 5 die Anordnung aus Fig. 4 mit einem montierten Statorrückschluss,
Fig. 6 die Anordnung aus Fig. 5 mit einem montierten Kontaktträger,
Fig. 7 die Anordnung aus Fig.6 mit einer montierten Leiterplatte,
Fig. 8 die Anordnung aus Fig. 7 mit einem montierten Wärmeleitkörper,
Fig. 9 die Anordnung aus Fig. 8 mit einer bestückten Leiterplatte,
Fig. 10 die Anordnung aus Fig. 9 mit montiertem Motorgehäuse,
Fig. 11 eine Ansicht aus entgegengesetzter Perspektive auf die Trennwand,
Fig. 12 eine Ansicht aus der gleichen Perspektive auf die Statorpole,
Fig. 13a, 13b Ansichten des Wärmeleitkörpers,
Fig. 14a, 14b Ansichten der Leiterplatte,
Fig. 15a, 15b Ansichten des Kontaktträgers,
Fig. 16 eine Darstellung eines Statorpols,
Fig. 17 der Statorpol aus Fig. 16 mit montiertem Isolierstoffkörper,
Fig. 18 die Anordnung aus Fig. 17 mit einer Wicklung,
Fig. 19 die Anordnung aus Fig. 18 aus einer anderen Perspektive,
Fig. 20a zeigt eine zweite Ausführungsform des Wärmeleitkörpers und
Fig. 20b zeigt eine dritte Ausführungsform des Wärmeleitkörpers.

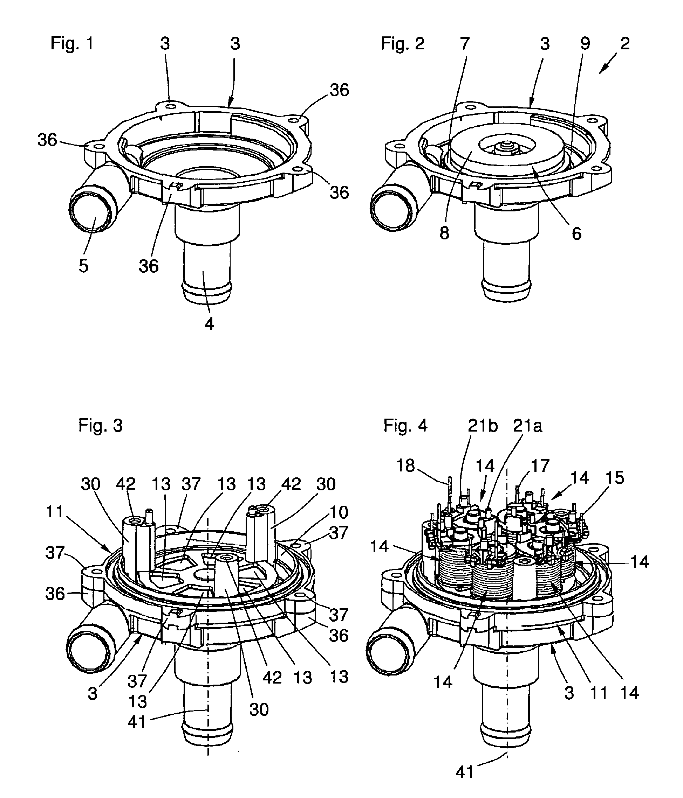

Fig. 1 zeigt eine räumliche Darstellung eines aus Kunststoffmaterial bestehenden Pumpengehäuses 3 mit einem Saugstutzen 4 einem Druckstutzen 5 und Anschraubaugen 36.

Fig. 2 zeigt das Pumpengehäuse 3 aus Fig.1 mit einem in einem Pumpenraum 9 montierten Pumpenrotor 6, der auf einer Achse drehbar gelagert ist. Der Pumpenrotor 6 besteht im Wesentlichen aus einem Permanentmagneten 8 in Form eines alternierend magnetisierten Permanentmagnetring, der mit einem Pumpenrad 7 verbunden ist.

Fig. 3 zeigt die Anordnung aus Fig. 2 mit einer montierten Trennwand 11, die den Pumpenraum von einem Trockenraum 10 trennt. Die Trennwand 11 weist ebenfalls Anschraubaugen 37 auf, die mit den Anschraubaugen 36 des Pumpengehäuses 3 korrespondieren. Die Trennwand 11 weist Vertiefungen 13 auf zur Aufnahme von Statorpolen, insbesondere dessen Polschuhen. Die Trennwand ist weiter mit drei mit Innengewinden 42 versehenen Befestigungsbuchsen 30 einstückig, die sich parallel um eine Motorachse 41 aus der Trennwandebene 11 erstrecken.

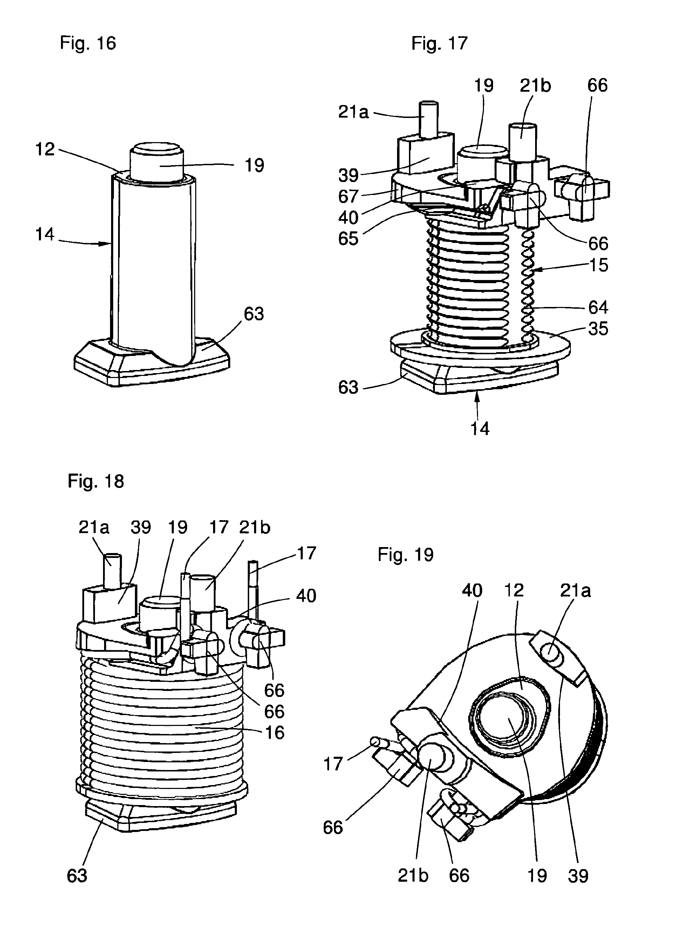

Fig. 4 zeigt die Anordnung aus Fig. 3 mit sechs montierten bewickelten Statorpolen 14, die achsparallel ausgerichtet und gleichmäßig um die Motorachse 41 verteilt angeordnet sind. Die Statorpole 14 sind jeweils von einem Isolierstoffkörper 15 umgeben, die mit einer Statorwicklung 16 versehen sind. Die Wicklungen sind mechanisch an dem Isolierstoffkörper 15 fixiert und ihre Enden 17, 18 erstrecken sich parallel zur Motorachse 41. Erste Wicklungsenden 17 enden in einer ersten Ebene während zweite Wicklungsenden 18 länger als die ersten Wicklungsenden 17 ausgebildet sind und in einer zweiten Ebene enden. Die Isolierstoff körper 15 sind mit Aufnahmen 21 a, 21 b einstückig, die sich achsparallel von der pumpenabgewandten Seite aus zapfenartig erstrecken. Die weitere Beschreibung der Statorpole 14 erfolgt zu den Figuren 16 bis 19.

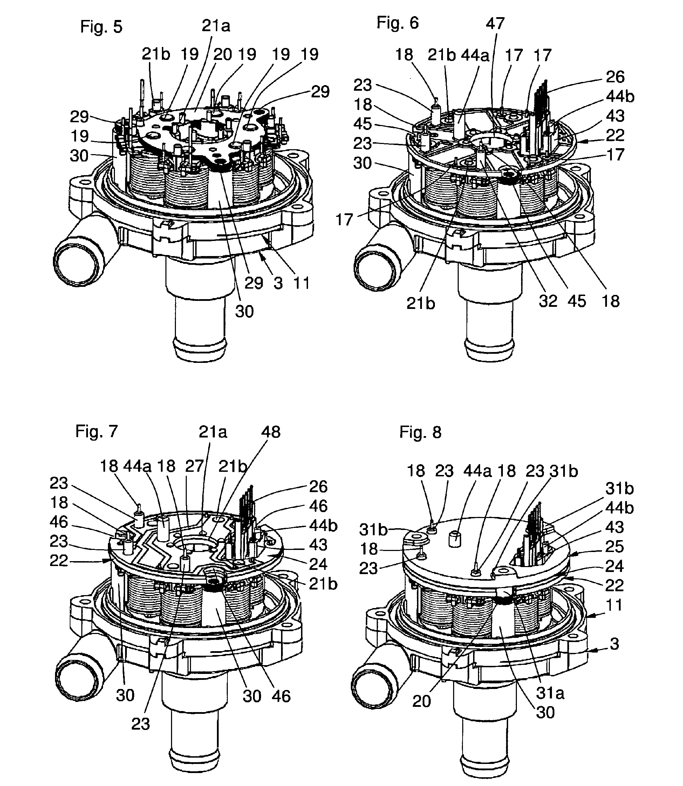

Fig. 5 zeigt die Anordnung aus Fig. 4 mit einem montierten Statorrückschluss 20, der aus einem Blechstapel von mehreren gleichartig ausgebildeten Rückschlussblechen besteht. Der Statorrückschluss 20 weist Befestigungsmittel 29 auf, die aus drei radialen Vorsprüngen mit scheibenförmigen Ausstanzungen bestehen, die sich mit den Innengewinden 42 der Befestigungsbuchsen 30 decken. An zwei Befestigungsbuchsen 30 sind neben den Innengwinden 42 Vorsprünge vorgesehen, die unterschiedlich dimensioniert sind und eine falsche Montage des Statorrückschlusses 20 verhindern sollen. Jeder Pol besitzt einen Aufnahmedorn 19, der in jeweils eine entsprechend ausgebildete Ausnehmung des Statorrückschlusses 20 eingreift. Der Statorrückschluss 20 ist ringartig ausgebildet und verläuft innerhalb der durch die Aufnahmen 21 a und 21 b beschriebenen Kreise. Der Statorrückschluss 20 ist mit den Statorpolen 14 durch einen Umformvorgang, wie Verstemmen gegen Lösen gesichert.

Fig. 6 zeigt die Anordnung aus Fig. 5 mit einem montierten Kontaktträger 22 der aus Kunststoffmaterial besteht. Der Kontaktträger 22 ist mit Kontaktaufnahmen 43, mit Aufnahmedornen 23, mit Durchbrüchen für die Aufnahmen 21 a und 21 b der Isolierstoffkörper, mit Durchbrüchen für die Wicklungsenden 17, mit Freisparungen 45 im Bereich der Befestigungsbuchsen 30, mit einer zentralen Ausnehmung 47 und mit Zentrierzapfen 44a, 44b einstückig. Die Aufnahmedorne 23 sind hohl ausgebildet und nehmen die zweiten Wicklungsenden 18 auf, welche im montierten Zustand des Kontaktträgers deutlich aus den hohlen Aufnahmedornen 23 hervorragen. Die Kontaktaufnahmen sind so geformt, dass U-förmig gebogene Kontakte sich darin verkrallen können. Ein Teil der U-förmigen Anschlusskontakte 26 enden einerseits auf einer ersten zur Motorachse gerichteten Seite und andererseits in einer Steckerebene und ein anderer Teil der U-förmigen Anschlusskontakte 26 enden einerseits auf einer zweiten von der Motorachse abseitigen Seite und andererseits in der Steckerebene.

Fig. 7 zeigt die Anordnung aus Fig.6 mit einer montierten Leiterplatte 24, die im Wesentlichen mit den gleichen Durchbrüchen und Freisparungen wie der Kontaktträger 22 ausgebildet ist. Im Einzelnen weist die Leiterplatte 24 Freisparungen 46 im Bereich der Befestigungsbuchsen 30, eine zentrale Ausnehmung 48 und verschiedene Durchbrüche für die Aufnahmen 21 a, 21 b der Isolierstoffkörper, für die hohlen Aufnahmedorne 23 des Kontaktträgers und für Kontaktdurchbrüche für die elektrische und mechanische Verbindung der ersten kürzeren Wicklungsenden 17 mit der Leiterplatte, insbesondere mit Lötaugen, die über Leiterbahnen 27 teilweise miteinander verbunden sind. Weiter ist ein Durchbruch für die Kontaktaufnahmen 43 und den Zentrierzapfen 44a vorhanden. Die Aufnahmen 21 a und 21 a sind nach einem Warmumformprozess so verformt, dass die Leiterplatte 24 und der Kontaktträger 22 fest mit den sechs Isolierstoffkörpern formschlüssig verbunden sind, wobei die Aufnahmen 21 a, 21 b nietkopfartig verformt sind.

Fig. 8 zeigt die Anordnung aus Fig. 7 mit einem montierten Wärmeleitkörper 25. Der Wärmeleitkörper 25 besteht aus Aluminium und ist mit Aussparungen für die hohlen Aufnahmedorne 23, den Zentrierzapfen 44a und die Kontaktaufnahmen 43 versehen. Weiter ist der Wärmeleitkörper 25 mit Abstandhaltern 31 a einstückig, die die in Freisparungen 45 des Kontaktträgers 22 und Freisparungen 46 der Leiterplatte 24 eingreifen und sich bis zum Rückschluss 20 erstrecken. Auf der den Abstandhaltern 31 a gegenüberliegenden Seite des Wärmeleitkörpers sind weitere Abstandhalter 31 b vorgesehen, die zur Aufnahme einer weiteren Leiterplatte dienen. Der Wärmeleitkörper besteht aus einem ersten im Wesentlichen scheibenförmigen Bereich und einem zweiten im Wesentlichen hohlzylindrischen Bereich, der zentral an den scheibenförmigen Bereich anschließt und sich über die zentrale Ausnehmung 48 der Leiterplatte 24 und die zentrale Ausnehmung 47 des Kontaktträgers und eine zentrale Ausnehmung des Statorrückschlusses bis zur Trennwand 11 erstreckt.

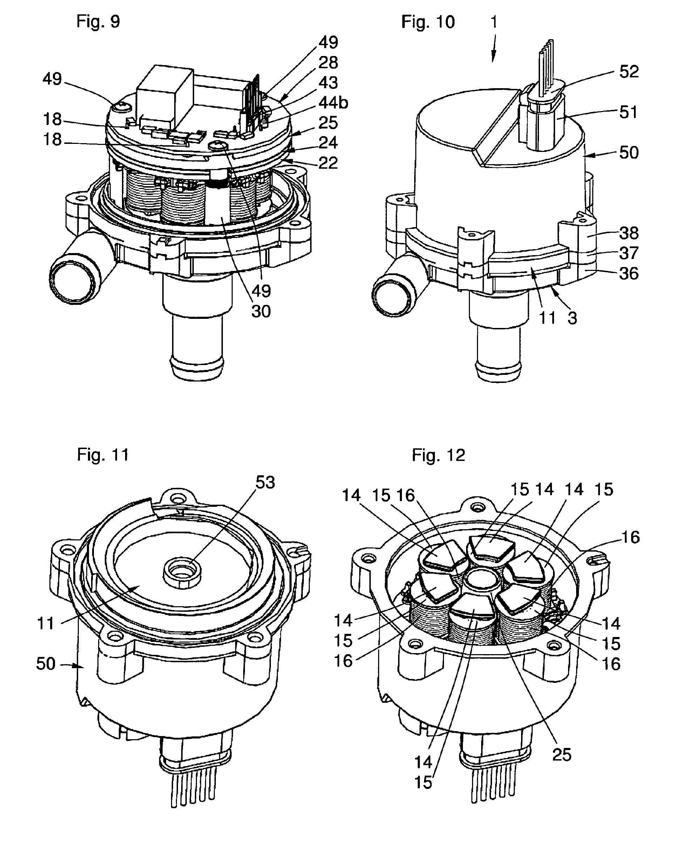

Fig. 9 zeigt die Anordnung aus Fig. 8 mit einer bestückten Leiterplatte 28. Die Leiterplatte 28 weist Kontaktdurchbrüche für den Durchgang der Wicklungsenden 18 auf, die an Lötaugen mit der Leiterplatte 28 elektrisch und mechanisch verbunden sind. Weiter weist die Leiterplatte 28 einen Durchbruch für die Kontaktaufnahmen 43 auf. Die Leiterplatte 28 liegt an den Abstandhaltern 31 b axial und an den Zentrierzapfen 44a, 44b radial an und ist mit Schrauben 49 mit den Befestigungsbuchsen 30 verschraubt, wodurch sie neben der Leiterplatte 28 auch den Wärmeleitkörper 25 und den Statorrückschluss festlegen.

Fig. 10 zeigt die Anordnung aus Fig. 9 mit montiertem Motorgehäuse 50, das mit einem Steckergehäuse 51 einstückig ist, in das ein Stecker 52 eingesteckt ist. Auch das Motorgehäuse ist mit Anschraubaugen 38 einstückig, wobei diese mit den Anschraubaugen 37 der Trennwand 11 und den Anschraubaugen 36 des Pumpengehäuses übereinstimmen.

Fig. 11 zeigt eine Ansicht aus entgegengesetzter Perspektive auf die Trennwand 11 mit dem daran anschließenden Motorgehäuse. Die Trennwand 11 und das Motorgehäuse begrenzen den Trockenraum, worin sich der Stator des Gleichstrommotors befindet. Die Trennwand 11 ist mit einer Lageraufnahme 53 für die Aufnahme eines Axiallagers zur Lagerung des Pumpenrotors einstückig.

Fig. 12 zeigt eine Ansicht aus der gleichen Perspektive auf die Statorpole 14, mit den Isolierstoffkörpern 15, den Wicklungen 16 und dem hohlzylindrischen Bereich des Wärmeleitkörpers 25.

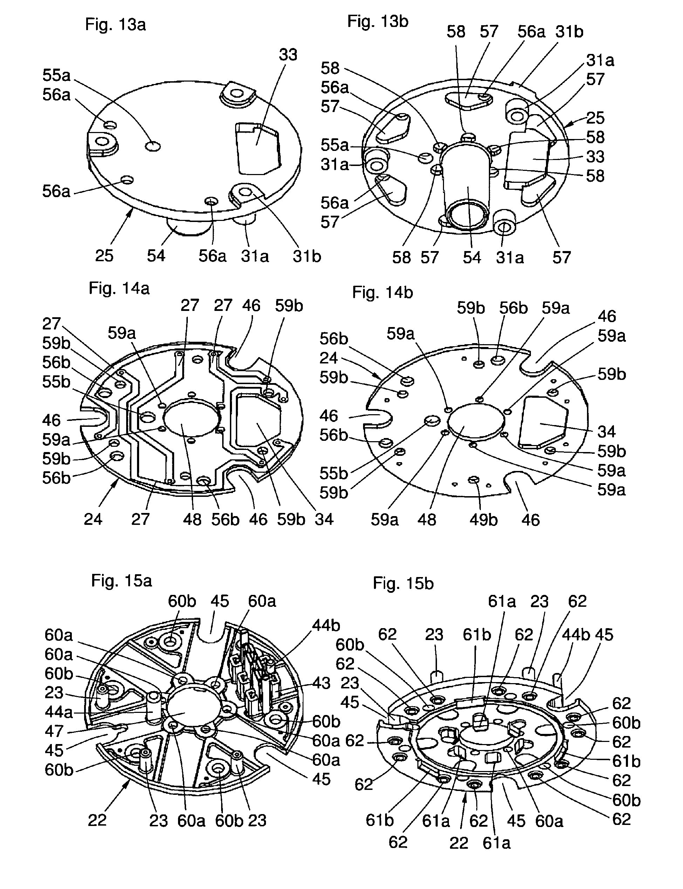

Fig. 13a, 13b zeigen Ansichten des Wärmeleitkörpers 25, mit einem Durchbruch 55a für den Zentrierzapfen 44a, drei Durchbrüchen 56a für die Aufnahmedorne 23 des Kontaktträgers, eine Steckerausnehmung 33, Abstandhaltern 31 a und 31 b und einem hohlzylindrischen Bereich 54, der zentral am Wärmeleitkörper angeordnet ist.

In Fig. 13b sind weiter große Freisparungen 57 und kleine Freisparungen 58 für die Lötstellen und Nietköpfe vorgesehen.

Fig. 14a, 14b zeigen Ansichten der Leiterplatte 24, mit den Leiterbahnen 27, Durchbrüchen 59a für die innere Aufnahmen des Isolierstoffkörpers, Durchbrüchen 59b für die äußeren Aufnahmen des Isolierstoffkörpers, die zentrale Ausnehmung 48, den Durchbruch 55b für den Zentrierzapfen 44a, Durchbrüche 56b für die Aufnahmedorne 23 des Kontaktträgers, Freisparungen 46 für die Abstandhalter des Wärmeleitkörpers, einen Steckerausnehmung 34 und weitere Durchbrüche für die Wicklungsenden.

Fig. 15a, 15b zeigen Ansichten des Kontaktträgers 22, mit den Zentrierzapfen 44a, 44b, den hohlen Ausnahmedornen 23 die Kontaktaufnahmen 43, die mit dem Kontaktträger einstückig sind, Freisparungen 45 für die Abstandhalter des Wärmeleitkörpers, die zentrale Ausnehmung für die Aufnahme des zylindrischen Teils des Wärmeleitkörpers, Durchbrüche 60a für die inneren Aufnahmen der Isolierstoffkörper, Durchbrüche 60b für die äußeren Aufnahmen der Isolierstoffkörper und Durchbrüche für die Wickeldrahtenden. In Fig. 15b sind weiter innere Zentriermittel 61 a, äußere Zentriermittel 61 b für die Montage auf den Statorrückschluss und Fügehilfen 62, die im Wesentlichen kegelförmig ausgebildet sind, um die Wicklungsenden bei der Montage des Kontaktträgers einfacher fügen zu können.

Fig. 16 zeigt eine Darstellung eines Statorpols 14, umfassend einen Aufnahmedorn 19, zur Verbindung mit dem Statorrückschluss und einen Polschuh 63, der eine etwa kreissegmentförmige Querschnittsfläche besitzt. Der Statorpol 14 besteht im vorliegenden Ausführungsbeispiel aus einem aus der Pulverform gepressten und gesinterten magnetisch leitfähigem Material.

Fig. 17 zeigt den Statorpol aus Fig. 16 mit montiertem Isolierstoffkörper 15, mit einem Kontaktflansch 67, einem Kragen 35, Rillen 64 im Grund des Isolierstoffkörpers, die dazu dienen eine regelmäßige Anordnung der Wickeldrähte zu erreichen, eine Drahtführung 65 um das Drahtende nach dem Wickelvorgang definiert an das Anformungen 66 heranzuführen und anschließend um das jeweilige Befestigungsmittel herumzuwickeln, wobei eine Windung ausreichend ist. Nach Fertigstellung der Wicklung sind beide Wicklungsenden 17 achsparallel zur Polachse und später auch zur Motorachse ausgerichtet. Der Isolierstoffkörper weist weiter Aufnahmemittel 39 und 40 für die Aufnahme des Statorrückschlusses 20 auf. An die Aufnahmemittel 39 und 40 schließen die innere zapfenförmige Aufnahme 21 a bzw. die äußere zapfenförmige Aufnahme 21b an. Beide sind achsparallel ausgerichtet.

Fig. 18 zeigt die Anordnung aus Fig. 17 mit einer Wicklung 16 bewickelt. Hier ist gut zu erkennen, wie die Drahtführung mit dem Wickeldraht belegt und wie das Wickeldrahtende um die Befestigungsmittel herumgewickelt ist.

Fig. 19 zeigt die Anordnung aus Fig. 18 aus einer anderen Perspektive. Hier ist deutlich zu erkennen, dass der Pol einen polygonförmigen Querschnitt 12 aufweist. Diese dient in erster Linie der Verdrehsicherung und schließlich auch der besseren Raumausnutzung.

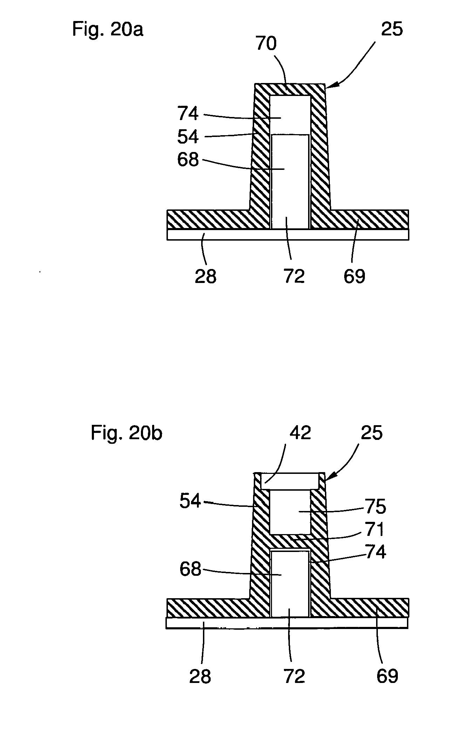

Fig. 20a zeigt eine zweite Ausführungsform des Wärmeleitkörpers 25, bei der der scheibenförmige Bereich 69 zentral mit einem zentralen Durchbruch 72 versehen ist und der hohlzylindrische Bereich 54 durch einen Boden 70 an ihrer dem Pumpenlaufrad zugewanden Seite geschlossen ist. Durch diese Ausgestaltung ergibt sich die Möglichkeit einen baugroßen Kondensator 68, der auf der Leiterplatte 28 angeordnet ist, platzsparend in einem Aufnahmeraum 74 des Wärmeleitkörpers 25 unterzubringen.

Fig. 20b zeigt eine dritte Ausführungsform des Wärmeleitkörpers 25, bei dem der hohlzylindrische Bereich 54 beidseitig offen ist, aber in seinem mittleren Bereich eine Trennwand 71 vorgesehen ist, die den Trockenraum vom Nassraum trennt. Bei dieser Ausführungsform ist auch die Trennwand 11 (hier nicht dargestellt) durchbrochen, so dass sich ein zusätzlicher Nassraum 75 bis zur Trennwand 71 erstreckt. Die dritte Ausführungsform kombiniert die beiden ersten Ausführungsformen des Wärmeleitkörpers 25 miteinander. Zum einen ist ein Bauraum für den Kondensator 68 vorhanden, zum anderen ist ein Teil des hohlzylindrischen Bereiches 54 auch als Kühlkanal nutzbar. Am Ende des hohlzylindrischen Bereichs 54 befindet sich ein Aufnahmeraum 73 für ein Lager.

### Bezugszeichenliste

- 1: Gleichstrommotor
- 2: Flüssigkeitspumpe
- 3: Pumpengehäuse
- 4: Saugstutzen
- 5: Druckstutzen
- 6: Pumpenrotor
- 7: Pumpenrad
- 8: Permanentmagnet
- 9: Pumpenraum
- 10: Trockenraum
- 11: Trennwand
- 12: polygonförmiger Querschnitt
- 13: Vertiefungen
- 14: Statorpol
- 15: Isolierstoffkörper
- 16: Statorwicklung
- 17: erstes Wicklungsende
- 18: zweites Wicklungsende
- 19: Aufnahmedorn
- 20: Statorrückschluss
- 21 a: Aufnahme
- 21 b: Aufnahme
- 22: Kontaktträger
- 23: hohler Aufnahmedorn
- 24: erste Leiterplatte
- 25: Wärmeleitkörper
- 26: Anschlusskontakte
- 27: Leiterbahn
- 28: bestückte Leiterplatte
- 29: Befestigungsmittel
- 30: Befestigungsbuchse
- 31 a: Abstandhalter

- 31 b: Abstandhalter
- 33: Steckerausnehmung
- 34: Steckerausnehmung
- 35: Kragen
- 36: Anschraubaugen
- 37: Anschraubaugen
- 38: Anschraubaugen
- 39: Aufnahmemittel für Rückschluss
- 40: Aufnahmemittel für Rückschluss
- 41: Motorachse
- 42: Innengewinde
- 43: Kontaktaufnahmen
- 44a: Zentrierzapfen
- 44b: Zentrierzapfen
- 45: Freisparungen in Kontaktträger
- 46: Freisparungen in Leiterplatte
- 47: zentrale Ausnehmung im Träger
- 48: zentrale Ausnehmung in LP
- 49: Schraube
- 50: Motorgehäuse
- 51: Steckergehäuse
- 52: Stecker
- 53: Lageraufnahme
- 54: hohlzylindrischer Bereich
- 55a: Durchbruch für Zentrierzapfen
- 55b: Durchbruch für Zentrierzapfen
- 56a: Durchbruch für Aufnahmedorn
- 56b: Durchbruch für Aufnahmedorn
- 57: große Freisparung
- 58: kleine Freisparungen
- 59a: Durchbruch für Aufnahme innen
- 59b: Durchbruch für Aufnahme außen

- 60a: Durchbruch für Aufnahme innen
- 60b: Durchbruch für Aufnahme außen
- 61a: innere Zentriermittel
- 61b: äußere Zentriermittel
- 62: Fügehilfe
- 63: Polschuh
- 64: Rille
- 65: Drahtführung
- 66: Anformungen
- 67: Kontaktflansch
- 68: Kondensator
- 69: scheibenförmiger Bereich
- 70: Boden
- 71: Trennwand
- 72: Zentraler Durchbruch
- 73: Aufnahmeraum für Lager
- 74: Aufnahmeraum für Kondensator
- 75: zusätzlicher Nassraum

## Patentansprüche

1. Elektronisch kommutierter Gleichstrommotor (1) für eine Flüssigkeitspumpe (2), mit einem Pumpengehäuse (3) mit einem Saugstutzen (4) und einem Druckstutzen (5) zum Anschluss an einen Flüssigkeitskreislauf, einem im Wesentlichen scheibenförmigen, im Pumpengehäuse drehbar gelagerten Pumpenrotor (6), bestehend aus einem Pumpenrad (7) mit mehreren Pumpenflügeln und einem Permanentmagneten (8), einer einen Pumpenraum (9) von einem Trockenraum (10) abtrennende Trennwand (11), wobei die Trennwand in einem Axialspalt (12) zwischen dem Pumpenrotor (6) und mehreren axial ausgerichteten bewickelten Statorpolen (14) des Gleichstrommotors angeordnet ist, **gekennzeichnet durch** die Kombination folgender Merkmale:
a) die Pole (14) sind mit Isolierstoffkörpern (15) versehen, die mit Statorwicklungen (16) umwickelt sind, deren Enden (17, 18) an Anformungen (66) des Isolierstoffkörpers (15) mechanisch fixiert sind;
b) ein Teil der Wicklungsenden (17) ist mit einer ersten, in einer ersten zur Trennwand (11) parallelen Ebene angeordneten, Leiterplatte (24) mechanisch und elektrisch verbunden, wobei die Leiterplatte (24) Leiterbahnen (27), zur Verschaltung von Wicklungsenden (17) der Statorwicklungen (16) aufweist;
c) ein Teil der Wicklungsenden (18) ist mit einer zweiten bestückten und mit einer Steuerschaltung versehenen, in einer zweiten zur Trennwand (11) parallelen Ebene angeordneten, Leiterplatte (28) mechanisch und elektrisch verbunden;
d) zwischen den Isolierstoffkörpern (15) und der ersten Leiterplatte (24) ist ein Kontaktträger (22) angeordnet, der Kontaktaufnahmen (43) zur mechanischen Fixierung von Anschlusskontakten (26) des Gleichstrommotors aufweist.

2. Gleichstrommotor nach Anspruch 1, **dadurch gekennzeichnet, dass** die Anschlusskontakte (26) ausschließlich mit der zweiten bestückten Leiterplatte (28) elektrisch und mechanisch verbunden sind.

3. Gleichstrommotor nach Anspruch 1 oder 2, **dadurch gekennzeichnet, dass** die Isolierstoffkörper (15) mit Aufnahmen (21 a, 21 b) zur Fixierung des Kontaktträgers (22) versehen sind.

4. Gleichstrommotor nach Anspruch 3, **dadurch gekennzeichnet, dass** jeder Isolierstoffkörper (15) mit zwei Aufnahmen (21 a, 21 b) versehen ist, wobei eine Aufnahme (21 a) in Bezug auf die Motorachse radial innen und eine Aufnahme (21 b) radial außen angeordnet ist.

5. Gleichstrommotor nach Anspruch 1, 2, 3 oder 4, **dadurch gekennzeichnet, dass** der Kontaktträger (22) und die erste Leiterplatte (24) mit den Isolierstoffkörpern (15) nach einem Warmumformprozess formschlüssig verbunden sind.

6. Gleichstrommotor nach Anspruch 1, 2, 3, 4 oder 5, **dadurch gekennzeichnet, dass** der Kontaktträger (22) mit Aufnahmedornen (23) zur Aufnahme einer Leiterplatte (24) und eines Wärmeleitkörpers (25) ausgestattet ist.

7. Gleichstrommotor nach Anspruch 1, 2, 3, 4, 5 oder 6, **dadurch gekennzeichnet, dass** zumindest ein Aufnahmedorn (23) des Kontaktträgers (23) hohl ausgeführt ist und als Führungs- und Aufnahmemittel für Wicklungsenden (18) dient.

8. Gleichstrommotor nach Anspruch 1, 2, 3, 4, 5, 6 oder 7, **dadurch gekennzeichnet, dass** die Pole (14) Aufnahmedorne (19) zur Aufnahme eines Statorrückschlusses (20) aufweisen.

9. Gleichstrommotor nach Anspruch 1 oder 8, **dadurch gekennzeichnet, dass** der Statorrückschluss (20) Befestigungsmittel (29) aufweist, die an pfostenartig aus der Trennwand (11) vorspringenden Befestigungsbuchsen (30) anliegen.

10. Gleichstrommotor nach Anspruch 1, 8 oder 9, **dadurch gekennzeichnet, dass** der Statorrückschluss (20) an Aufnahmemitteln (39, 40) der Isolierstoffkörper zentriert ist und der Kontaktträger (22) Zentriermittel (61 a, 61 b) aufweist, mit deren Hilfe er sich am Statorrückschluss (20) zentriert.

11. Gleichstrommotor nach Anspruch 1, 8, 9 oder 10, **dadurch gekennzeichnet, dass** der Statorrückschluss (20) aus einem Blechpaket besteht.

12. Gleichstrommotor nach zumindest Anspruch 6, **dadurch gekennzeichnet, dass** zwischen den beiden Leiterplatten (24, 28) parallel zur Trennwand (11) ein Wärmeleitkörper (25) angeordnet ist.

13. Gleichstrommotor nach Anspruch 6 oder 12, **dadurch gekennzeichnet, dass** der Wärmeleitkörper (25) mit Abstandhaltern (31 a) einstückig ist, die in Freisparungen (45) des Kontaktträgers (22) und Freisparungen (46) der ersten Leiterplatte (24) eingreifen und sich bis zum Statorrückschluss (20) erstrecken.

14. Gleichstrommotor nach Anspruch 8, 12 oder 13, **dadurch gekennzeichnet, dass** die zweite Leiterplatte (28), der Wärmeleitkörper (25) und der Rückschluss (20) über die Befestigungsbuchsen (30) mit der Trennwand (11) verschraubt sind.

15. Gleichstrommotor nach Anspruch 6, 12, 13 oder 14, **dadurch gekennzeichnet, dass** die erste Leiterplatte (24), der Wärmeleitkörper (25) und die zweite Leiterplatte (28) je eine Steckerausnehmung (33, 34) für die Anschlusskontakte (26) und ihres Aufnahmeteils aufweisen.

16. Gleichstrommotor nach Anspruch 6, 12, 13, 14 oder 15, **dadurch gekennzeichnet, dass** der Wärmeleitkörper (25) aus einem scheibenförmigen Bereich und einem zentralen hohlzylindrischen Bereich besteht, der innerhalb eines durch die Statorpole beschriebenen Kreises angeordnet ist und sich bis zur Trennwand erstreckt.

17. Gleichstrommotor nach Anspruch 6, 12, 13, 14, 15 oder 16, **dadurch gekennzeichnet, dass** der Wärmeleitkörper im Wesentlichen aus Aluminium besteht.

18. Gleichstrommotor nach Anspruch 16 oder 17, **dadurch gekennzeichnet, dass** der Wärmeleitkörper (25) in seinem scheibenförmigen Bereich einen zentralen Durchbruch und in dem zentralen hohlzylindrischen Bereich einen Aufnahmeraum für einen Kondensator aufweist, wobei der Kondensator auf der zweiten Leiterplatte angeordnet ist und sich in den Aufnahmeraum erstreckt.
